# EUROPEAN PATENT APPLICATION

(11) **EP 2 489 934 A2**
(43) Date of publication of application: **22.08.2012**
(21) Application number: 12155666.6
(22) Date of filing: 15.02.2012
(51) Int. Cl.: F23D 14/70, F23R 3/28, F23L 7/00, F23C 9/00

(54) **Apparatus for injecting fluid into a combustion chamber of a combustor**

(30) Priority: 21.02.2011 US 201113031314
(71) Applicant: General Electric Company, Schenectady, NY 12345 (US)
(72) Inventor: Baruah, Abinash, 560066 Bangalore, Karnataka (IN); Popovic, Predrag, Greenville, SC South Carolina 19615 (US)
(74) Representative: Cleary, Fidelma

(57) **Abstract**

A combustor (20) is disclosed having a combustion liner (50) defining a combustion chamber (62). The combustor (20) may also include a liner cap (66) disposed upstream of the combustion chamber. The liner cap (66) may include a first plate (70) and a second plate (72). Additionally, the combustor may include a fluid conduit extending between the first and second plates. The fluid conduit may be configured to receive fluid flowing adjacent to the first plate and inject the fluid into the combustion chamber.

## Description

### FIELD OF THE INVENTION

The present subject matter relates generally to an apparatus for injecting fluid into a combustion chamber of a combustor and, more particularly, to a combustor including a liner cap having a plurality of fluid conduits for injecting fluid into the combustion chamber.

### BACKGROUND OF THE INVENTION

Gas turbines typically include a compressor section, a combustion section, and a turbine section. In conventional turbine applications, the compressor section pressurizes air flowing into the gas turbine. The pressurized air discharged from the compressor section flows into the combustion section, which is generally characterized by a plurality of combustors disposed in annular array about the axis of the engine. Specifically, the pressurized air flows along a combustion liner of each combustor and is directed into the combustor's fuel nozzles through one or more inlets or openings defined in the nozzles. The air is then mixed with fuel and the mixture is injected into and burned within the combustion chamber of each combustor. The hot gases of combustion then flow from the combustion section to the turbine section, wherein energy is extracted from the gases to drive the turbine and generate power.

In other turbine applications, the compressor discharge fluid or working fluid of the gas turbine may comprise a fluid other than air. For example, in oxy-fuel or stoichiometric exhaust gas recirculation (SEGR) applications, the compressor discharge fluid may comprise an oxygen deficient fluid. In such applications, the compressor discharge fluid is primarily utilized to cool turbine components and to dilute the hot gases of combustion produced within the primary flame zone of the combustion chamber. For example, it is known to inject compressor discharge fluid into the combustion chamber through the combustion liner as one or more cross-mixing flows (i.e., perpendicular to the flow of fluids through the combustion liner) in order to promote mixing of the fuel and other fluids expelled from the fuel nozzles. However, these cross-mixing flows can significantly quench the flame contained within the combustion chamber. Such flame quenching can lead to the dissociation of carbon-dioxide within the primary flame zone, thereby significantly decreasing the overall combustion efficiency of the combustor.

Accordingly, a combustor arrangement that allows compressor discharge fluid to be injected into the combustion chamber without significant flame quenching would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the present resides in a combustor having a combustion liner defining a combustion chamber. The combustor may also include a liner cap disposed upstream of the combustion chamber. The liner cap may include a first plate and a second plate. Additionally, the combustor may include a fluid conduit extending between the first and second plates. The fluid conduit may be configured to receive fluid flowing adjacent to the first plate and inject the fluid into the combustion chamber.

The combustor may include a fuel nozzle defining a nozzle centerline and additionally, a plurality fluid conduit extending between the first and second plates and spaced apart around the nozzle centerline. The fluid conduits may be configured to receive fluid flowing adjacent to the first plate and inject the fluid into the combustion chamber.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

Embodiments of the present invention will now be described, by way of example only, with reference to the accompanying drawings in which:
FIG. 1 illustrates a simplified, block diagram of one embodiment of a gas turbine in accordance with aspects of the present subject matter;
FIG. 2 illustrates a cross-sectional side view of one embodiment of a combustor suitable for use with the disclosed gas turbine in accordance with aspects of the present subject matter;
FIG. 3 illustrates a cross-sectional view of the combustor shown in FIG. 2 taken along line 3-3, particularly illustrating one embodiment of a combustion liner cap of the combustor looking upstream from the combustion chamber;
FIG. 4 illustrates a partial, cross-sectional view of the combustor shown in FIG. 2;
FIG. 5 illustrates a close-up view of a portion of the combustor shown in FIG. 4;
FIG. 6 illustrates a partial, cross-sectional view of another embodiment of the combustor shown in FIGS. 4 and 5; and
FIG. 7 illustrates a partial view of another embodiment of a combustion liner cap of the combustor, particularly illustrating the combustion liner cap looking upstream from the combustion chamber.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to a combustor arrangement for injecting fluid into a combustion chamber of the combustor. In particular, the present subject matter discloses a combustor including a combustion liner cap having a plurality of fluid conduits configured to inject fluid jets of compressor discharge fluid around the outer perimeter of the fuel and other fluids expelled from the combustor's fuel nozzles. Such fluid jets may enable the formation of recirculation bubbles along the inner perimeter of the combustion liner and at a central location within the combustion chamber that restrict the expansion of the stream of fluids exiting the fuel nozzles and promote mixing of such fluids, yielding an improved flame stabilization mechanism. Moreover, since the fluid jets are not directed perpendicularly into the stream of fluids exiting the fuel nozzles, the occurrence of flame quenching may be significantly reduced. As a result, the carbon-dioxide dissociation within the primary flame zone may be decreased, thereby increasing the overall combustion efficiency of the combustor.

In several embodiments of the present subject matter, the disclosed combustor arrangement may be utilized with closed loop turbine applications having a combustion system (e.g., oxy-fuel combustion systems, near stoichiometric exhaust gas recirculation (SEGR) combustion systems and other low oxygen discharge combustion systems) wherein the fuel supplied through the fuel nozzles is mixed with an oxidizer (e.g., a pure oxygen flow or an oxygen enriched flow) in order to achieve near-stoichiometric combustion. In these turbine applications, the compressor discharge fluid or working fluid of the combustor is typically an oxygen deficient fluid utilized to dilute the gases contained within the primary flame zone. Some examples of an oxygen deficient working fluid may include, for example, a carbon dioxide and steam based mixture and a carbon dioxide and nitrogen based mixture. It has been found by the inventors of the present subject matter that the disclosed combustor arrangement may be particularly advantageous for such turbine applications, as the recirculation bubbles created by the fluid jets may increase the residence time of the oxidizer within the primary flame zone without causing significant flame quenching. As a result, the increased flame stabilization and combustion efficiency typically required with near-stoichiometric applications may be achieved in an efficient and cost-effective manner. However, it should be appreciated that the present subject matter need not be limited to such applications, but may generally be applicable to any suitable turbine application known in the art.

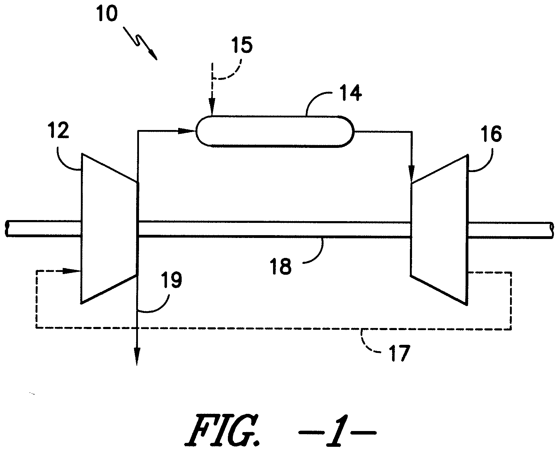

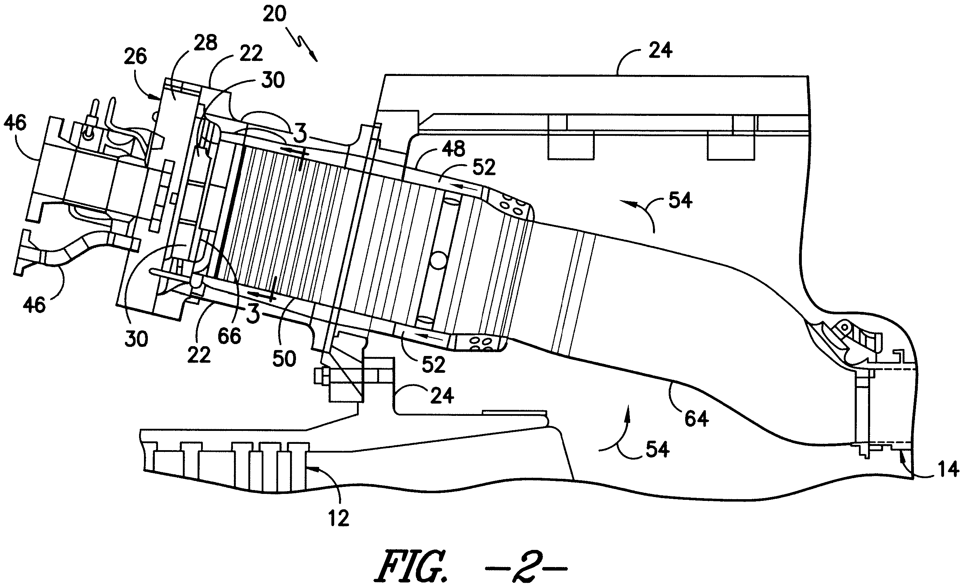

Referring now to the drawings, FIG. 1 illustrates a simplified, block diagram of one embodiment of a gas turbine 10. The gas turbine 10 includes a compressor section 12, a combustion section 14, and a turbine section 16. The combustion section 14 may include a plurality of combustors 20 (one of which is illustrated in FIG. 2) disposed in annular array about the axis of the gas turbine 10. The compressor section 12 and turbine section 16 may be coupled by a shaft 18. The shaft 18 may be a single shaft or a plurality of shaft segments coupled together to form the shaft 18.

As shown, the gas turbine 10 is generally configured as a closed loop gas turbine, wherein the exhaust gases 17 expelled from the turbine section 16 are re-directed back into the compressor section 12. Thus, during operation of the gas turbine 10, the compressor section 12 may be configured to pressurize the re-circulated exhaust gases and direct such pressurized gases into the combustion section 14. Within each combustor 20 (FIG. 2), the pressurized gases may be mixed with one or more fluids 15 (e.g., fuel and an oxidizer) and burned. The hot gases of combustion may then flow from the combustion section 14 to the turbine section 16, wherein energy is extracted to produce work. Additionally, as shown, an extraction flow 19 may be removed from within the closed loop. For example, the extraction flow 19 may comprise a fluid with a high carbon dioxide content that can be used for carbon capture.

It should be readily appreciated that, prior to the exhaust gases 17 being re-directed back into the compressor section 12, the exhaust gases 17 may be directed into one or more downstream components of a combined cycle power generation system. For example, the exhaust gases 17 expelled from the turbine section 16 may first be directed into a heat recovery steam generator (HRSG) (not shown) configured to produce superheated steam for driving a suitable stream turbine. It should also be appreciated that the present subject matter need not be limited to such closed loop gas turbine applications, but may generally be applicable to any suitable turbine application.

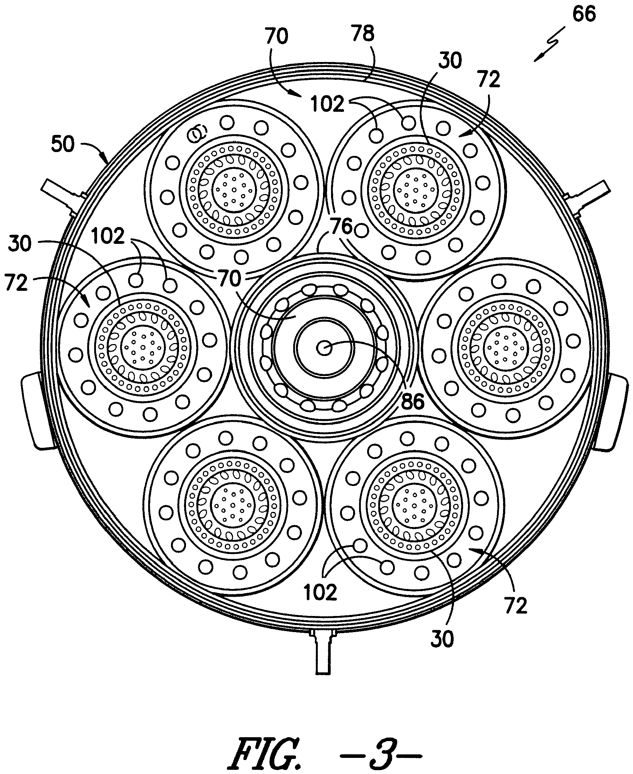

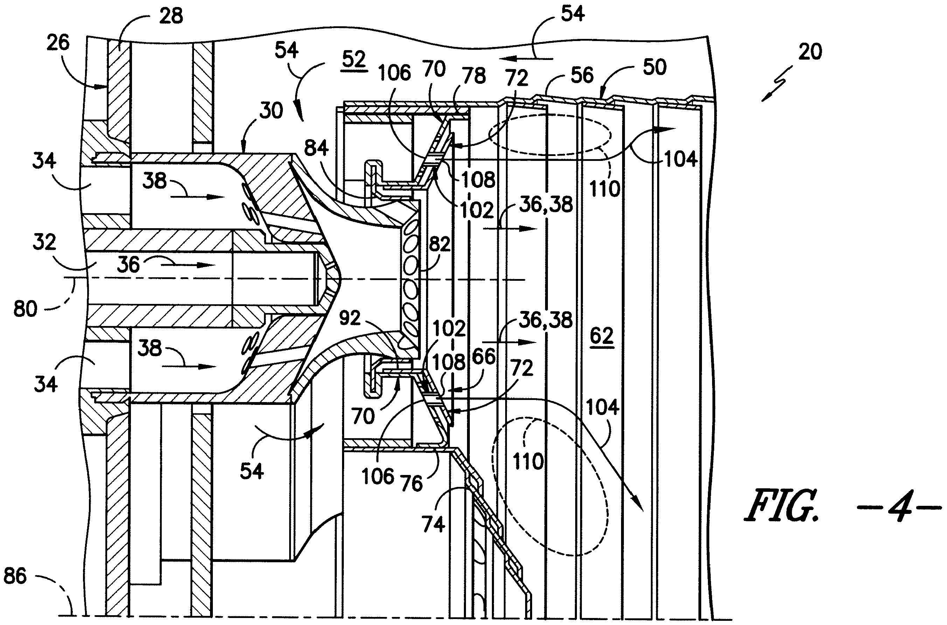

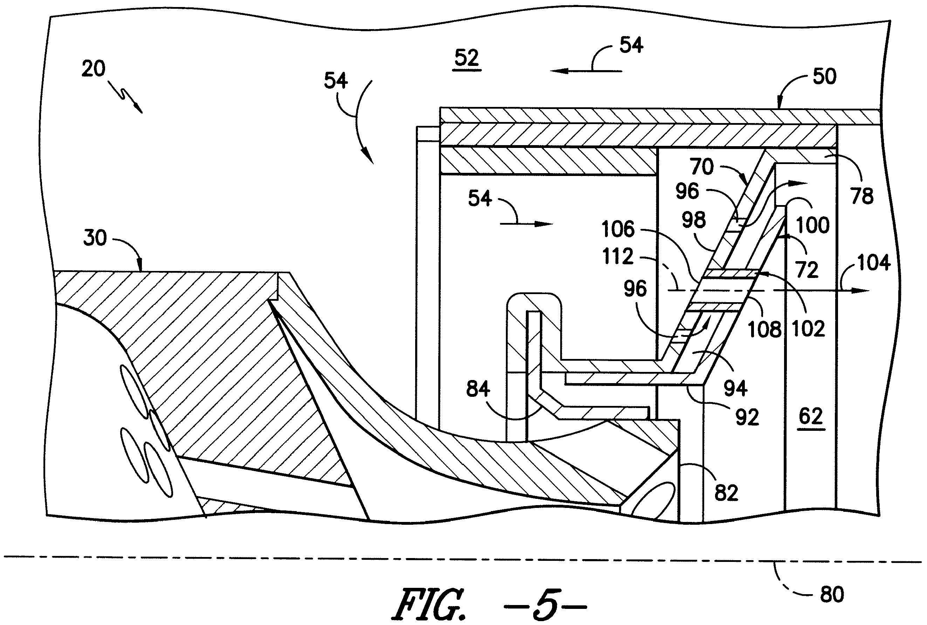

Referring to FIGS. 2-5, there is illustrated one embodiment of a combustor 20 in accordance with aspects of the present subject matter. In particular, FIG. 2 illustrates a cross-sectional side view of the combustor 20. FIG. 3 illustrates a cross-sectional view of the combustor 20 shown in FIG. 2 taken along line 3-3, particularly illustrating one embodiment of a combustion liner cap 66 of the combustor 20 looking upstream from the combustion chamber 62. FIG. 4 illustrates a partial, cross-sectional view of the combustor 20 shown in FIG. 2. Additionally, FIG. 5 illustrates a close-up view of a portion of the combustor 20 shown in FIG. 4.

In general, the combustor 20 may include a substantially cylindrical combustion casing 22 secured to a portion of a gas turbine casing 24, such as a compressor discharge casing or a combustion wrapper casing. Additionally, an end cover assembly 26 may be secured to an upstream end of the combustion casing 22. The end cover assembly 26 may include an end cover 28 and a plurality of fuel nozzles 30 secured to the end cover 28. The fuel nozzles 30 may generally be configured to intake fuel (e.g., gaseous fuel and/or liquid fuel) and other fluids from suitable fluid sources (not shown), mix the fuel and other fluids and distribute the mixture downstream for combustion. For example, as shown in FIG. 4, each fuel nozzle 30 may include one or more fluid chambers 32, 34 for receiving one or more fluids, 36, 38 (e.g., fuel, oxidizing fluids, inert gases, air and/or the like), with the fluids 36, 38 being mixed together within the fuel nozzles 30 and expelled therefrom for subsequent combustion.

It should be appreciated that the end cover assembly 26 may also include a plurality of tubes, manifolds, associated valves and the like for supplying fluids to the fuel nozzles 30. For instance, as shown in FIG. 2, one or more supply tubes 46 may be disposed upstream of the end cover 28 and may extend through the end cover 28 in order to direct fluids 36, 38 into the fuel nozzles 30.

The combustor 20 may also include a flow sleeve 48 and a combustion liner 50 substantially concentrically arranged within the flow sleeve 48. As such, a radial space 52 may generally be defined between the flow sleeve 48 and the combustion liner 50 for directing the compressor discharge fluid 54 (indicated by the arrows) along the outer perimeter of the combustion liner 50. For example, the compressor discharge fluid 54 may enter the radial space 52 through the flow sleeve 48 and may be directed along the combustion liner 50 toward the fuel nozzles 30. Thus, as shown in FIG. 4, the compressor discharge fluid 54 flowing along the combustion liner 50 may be flow around the upstream end of the liner 50 and may be directed along the outer perimeter of each fuel nozzle 30. The combustion liner 50 may generally define a substantially cylindrical combustion chamber 62 (FIG. 4) downstream of the fuel nozzles 30. As is generally known, the fluids 36, 38 supplied through the fuel nozzles 30 may be injected into the combustion chamber 62 for combustion therein. The hot gases of combustion may then flow from the combustion chamber 62 to a transition piece 64 for directing such gases to a first stage nozzle (not shown) of the turbine section 16 (FIG. 1).

The disclosed combustor 20 may also include a combustion liner cap 66 coupled to the combustion liner 50 upstream of the combustion chamber 62. For example, in several embodiments, the liner cap 66 may be configured to be attached to and extend inwardly from the inner perimeter of the combustion liner 50 so to generally define the upstream end of the combustion chamber 62. As such, the liner cap 66 may serve to shield or protect any upstream components of the combustor 20 (e.g., the end cover assembly 26) from the hot gases of combustion produced within the combustion chamber 62.

In several embodiments, the liner cap 66 may generally include one or more plates 70, 72 disposed radially outwardly from a center body 74. For example, the liner cap 66 may include a nozzle plate 72 configured to extend generally radially between the center body 74 and the combustion liner 50. For example, as shown in the illustrated embodiment, the nozzle plate 70 may include an inner edge 76 coupled to the outer perimeter of the center body 74 and an outer edge 78 coupled to the inner perimeter of the combustion liner 50. Additionally, the nozzle plate 70 may generally be configured to extend from the inner and outer edges 76, 78 so as to receive and/or surround at least a portion of each fuel nozzle 30. Thus, as shown in FIG. 4, in one embodiment, the nozzle plate 70 may extend axially upstream and radially inwardly relative to a centerline 80 of each fuel nozzle 30 such that a downstream end 82 of each fuel nozzle 30 extends through and is concentrically arranged within a portion of the nozzle plate 70. In alternative embodiments, the nozzle plate 70 may extend or otherwise be oriented in any other suitable direction that allows a portion of each fuel nozzle 30 to be received in and/or surrounded by a portion of the nozzle plate 70. For instance, the nozzle plate 70 may simply be configured to extend radially inwardly relative to the centerline 80 of each nozzle 30. Moreover, in one embodiment, the nozzle plate 70 may be configured to be sealed to each of the fuel nozzles 30. For example, as shown in FIGS. 4 and 5, a suitable seal 84 (e.g., a floating collar seal) may be disposed between a portion of the nozzle plate 70 and a portion of each fuel nozzle 30.

It should be appreciated that the nozzle plate 70 of the liner cap 66 may generally be configured to accommodate any number and/or arrangement of fuel nozzles 30. For example, as shown in FIG. 3, the combustor 20 may include six fuel nozzles 30 disposed in an annular array about a central axis 86 of the combustion liner 50. However, in other embodiments, the combustor 20 may include any other suitable number and/or arrangement of fuel nozzles 30.

Moreover, the cap liner 66 may also include a plurality of splash plates 72 associated with each fuel nozzle 30. For example, as shown in FIG. 3, the cap liner 66 may include six splash plates 72 disposed adjacent to each fuel nozzle 30. Each splash plate 72 may generally be configured to shield the upstream components of the combustor 20 from the fuel and other fluids injected into and burned within the combustion chamber 62. For example, in the illustrated embodiment, the splash plates 72 may be configured to prevent the fluids 36, 38 injected from the fuel nozzles 30 from splashing back and/or impinging onto the nozzle plate 70. Additionally, the splash plates 72 may also prevent the hot gases of combustion produced within the combustor chamber 62 from re-circulating back towards the nozzle plate 70.

In several embodiments, each splash plate 72 may be configured to be attached to the nozzle plate 70 at a location adjacent to each fuel nozzle 30. For example, as particularly shown in FIGS. 4 and 5, in one embodiment, an axially extending portion 92 of each splash plate 72 may be attached to the nozzle plate 70 adjacent to each fuel nozzle 30 such that the splash plates 72 surround and/or encase the downstream ends 82 of the fuel nozzles 30. As such, each splash plate 72 may generally be concentrically arranged about the centerline 80 of each fuel nozzle 30. However, in other embodiments, the splash plates 72 may be attached to the nozzle plate 70 at any other suitable location and may have any other suitable arrangement relative to the fuel nozzle 30.

It should be appreciated that the splash plate 72 may be attached to the nozzle plate 70 using any suitable means known in the art. For instance, in one embodiment, the plates 70, 72 may be welded or brazed together. Alternatively, the plates 70, 72 may be attached using a friction fit (e.g., a press-fit or interference-fit) or using suitable mechanical fasteners (e.g., bolts, screws, pins, clips, brackets and the like). It should also be appreciated that, in alternative embodiments, the splash plates 72 may be configured to be attached to any other suitable turbine component that permits the splash plates 72 to extend outwardly from the nozzle pate 70 adjacent to each fuel nozzle 30.

Additionally, in several embodiments, each splash plate 72 may be configured to extend outwardly from the fuel nozzles 30 so as to be spaced apart axially from the nozzle plate 70. For example, as particularly shown in FIG. 5, a portion of each splash plate 72 may be spaced apart from the nozzle plate 70 such that a plenum 94 is defined between the plates 70, 72. In such embodiments, a plurality of impingement holes 96 may be defined through the nozzle plate 70 to permit the compressor discharge fluid 54 flowing adjacent to an outer face 98 of the nozzle plate 70 to be injected into the plenum 94. The compressor discharge fluid 54 injected through the impingement holes 96 may then flow between the plates 70, 72 and may be expelled along an outer edge 100 of the splash plate 72 into the combustion chamber 62.

It should be appreciated that any suitable number of impingement holes 96 may be defined in the nozzle plate 70 for injecting the compressor discharge fluid 54 into the plenum 94. Further, it should be appreciated that the impingement holes 96 may be defined in any suitable arrangement on the nozzle plate 70. For example, in one embodiment, the impingement holes 94 may be defined in one or more annular arrays about the centerline 80 of each fuel nozzle 30. Alternatively, the impingement holes 94 may be randomly scattered around the nozzle plate 70.

Moreover, in several embodiments of the present subject matter, a plurality of fluid conduits 102 may extend between the nozzle plate 70 and the splash plate 72 for injecting a plurality of fluid jets 104 of the compressor discharge fluid 54 through the liner cap 66 and into the combustion chamber 62. Each fluid conduit 102 may generally include an upstream end 106 in flow communication with the compressor discharge fluid 54 flowing adjacent to the nozzle plate 70 and a downstream end 108 in flow communication with the combustion chamber 62. Thus, as shown in FIGS. 4 and 5, in one embodiment, the upstream end 106 of each fluid conduit 102 may generally be disposed adjacent to the nozzle plate 70 and the downstream end 108 may generally be disposed adjacent to the splash plate 72, such as by configuring the ends 106, 108 of each fluid conduit 102 to be substantially aligned with the plates 70, 72. In alternative embodiments, the ends 106, 108 of each fluid conduit 102 may be disposed at any other suitable location, such as by extending axially further upstream of the nozzle plate 70 and/or further downstream of the splash plate 72.

It should be appreciated that the fluid conduits 102 may generally comprise any suitable tube, pipe, flow channel and/or any other structure that provides a passageway for the flow of compressor discharge fluid 54 between the nozzle plate 70 and the splash plate 72. For example, as shown in FIG. 3, in one embodiment, the fluid conduits 102 may generally comprise tubular members having circular cross-sectional shapes. However, in other embodiments, the fluid conduits 102 may have various other suitable cross-sectional shapes, such as rectangular, triangular and/or elliptical cross-sectional shapes. Additionally, in one embodiment, each fluid conduit 102 may have a diameter equal to about 51 millimeters (mm) (i.e., about 2 inches). In other embodiments, each fluid conduits 102 may have any other suitable diameter, such as a diameter of less than about 51 (mm) or greater than about 51 (mm). Moreover, in further embodiments, the fluid conduits 102 may be configured to taper in size. For example, the upstream end 106 of each fluid conduit 102 may have a diameter that is larger or smaller than the diameter of the downstream end 108 of each fluid conduit 102 such that the conduits 102 converge or diverge, respectively, along their length.

Further, in several embodiments, the particular number and size of the fluid conduits 102 may generally vary depending on the desired amount of compressor discharge fluid 54 to be injected into the combustor chamber 62. For example, in one embodiment, the number and size of the fluid conduits 102 may be chosen such that less than about 20% of the total amount of compressor discharge fluid 54 flowing into each combustor 20 is directed through the fluid conduits 102, such as from about 5% to about 20% of the total amount of the compressor discharge fluid 54 or from about 10% to about 15% of the total amount of the compressor discharge fluid 54 and all other subranges therebetween. However, in an alternative embodiment, the number and size of the fluid conduits 102 may be chosen such that greater than about 20% of the total amount of compressor discharge fluid 54 is directed through the fluid conduits 102.

Additionally, in several embodiments, the fluid conduits 102 may be attached to and/or between the nozzle and splash plates 70, 72 using any suitable means known in the art. For example, in one embodiment, a friction fit (e.g., a press-fit or interference-fit) may be utilized to secure the upstream and downstream ends 106, 108 of each fluid conduit 102 to the plates 70, 72. In another embodiment, the fluid conduits 102 may be welded between the nozzle plate 70 and splash plate 72 and/or attached to such plates 70, 72 using suitable mechanical fasteners (e.g., bolts, screws, pins, clips, brackets and the like).

Moreover, the fluid conduits 102 may generally be positioned in any suitable arrangement between the nozzle and splash plates 70, 72. For instance, as particularly shown in FIG. 3, in one embodiment, the fluid conduits 102 may generally be positioned between the plates 70, 72 in an annular array about the centerline 80 of each fuel nozzle 30. In others embodiments, the fluid conduits 102 may be positioned in two or more annular arrays about the centerline 80 of each fuel nozzle 30. Alternatively, the fluid conduits 102 may be scattered randomly between the nozzle and splash plates 70, 72.

As indicated above, the disclosed combustor arrangement may generally provide the combustor 20 improved flame stabilization and increased combustion efficiency. For example, as particularly shown in FIG. 4, the fluid jets 104 of compressor discharge fluid 54 injected into the combustion chamber 62 by the fluid conduits 102 may generally be directed along the outer perimeter of the stream of fluids 36, 38 exiting the fuel nozzles 30. As such, recirculation bubbles 110 may be formed adjacent to the inner perimeter of the combustion liner 50 and the center body 74 of the liner cap 66 that restrict the radially outward expansion of the fluids 36, 38, thereby facilitating enhanced mixing of the fluids 36, 38. Moreover, since the fluid jets 104 are directed in substantially the same direction as the fluids 36, 38 flowing through the combustion chamber 62, the entrainment of the compressor discharge fluid 54 with the fluids 36, 38 may be decreased, resulting in reduced flame quenching and carbon-dioxide dissociation.

Thus, in several embodiments of the present subject matter, the fluid conduits 102 may generally be disposed between the nozzle and splash plates 70, 72 so as to be coaxial with the fuel nozzles 30. For example, as shown in FIG. 5, a centerline 112 of each fluid conduit 102 may generally be oriented substantially parallel to the centerline 80 of each fuel nozzle 30. As such, the fluid jets 104 injected from the fluid conduits 102 may be directed substantially parallel to the flow of fluids 36, 38 exiting the fuel nozzles 30.

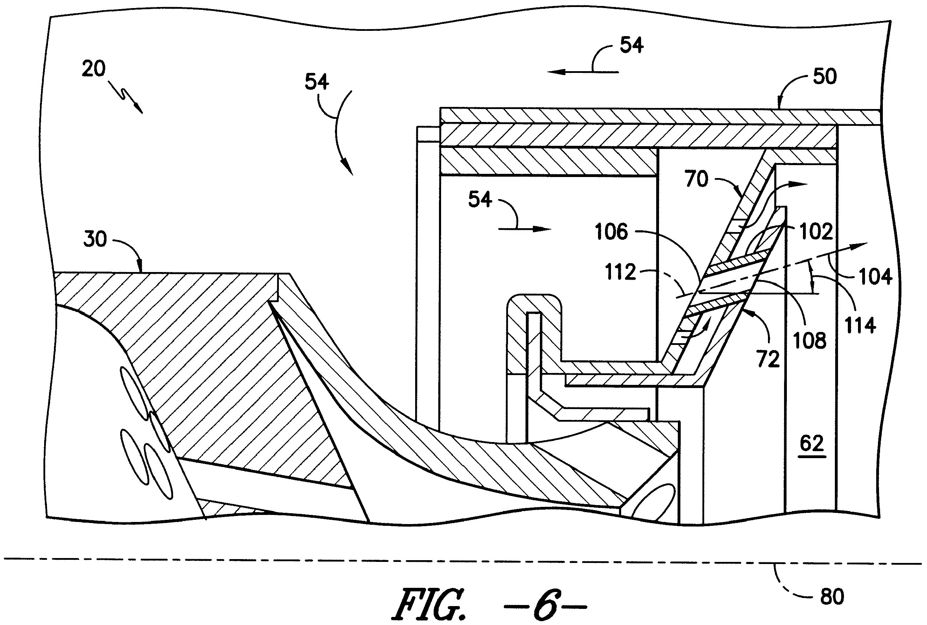

In other embodiments, the fluid conduits 102 may have any other suitable orientation relative to the centerline 80 of each fuel nozzle 30. For example, as shown in FIG. 6, the upstream end 106 of each fluid conduit 102 may generally be radially offset from the downstream end 108 of each fluid conduit 102 such that the fluid jets 104 expelled from the fluid conduits 102 are injected into the combustion chamber 62 at an angle. Specifically, in the illustrated embodiment, each upstream end 106 is positioned radially inwardly from each downstream end 108 relative to the centerline 80 of each fuel nozzle 30. As such, the fluid conduits 102 may generally extend outwardly at a radial angle 114 defined between the centerline 112 of each fluid conduit 102 and the centerline 80 of each fuel nozzle 30.

It should be appreciated that the fluid conduits 102 may generally be oriented at any suitable radial angle 114. However, in one embodiment, the radial angle 114 may be equal to less than about 30 degrees, such as from about 5 degrees to about 30 degrees or from about 20 degrees to about 30 degrees and all other subranges therebetween. It should also be appreciated that, in an alternative embodiment, each of fluid conduit 102 may be configured to extend radially inwardly between it upstream and downstream ends 106, 08.

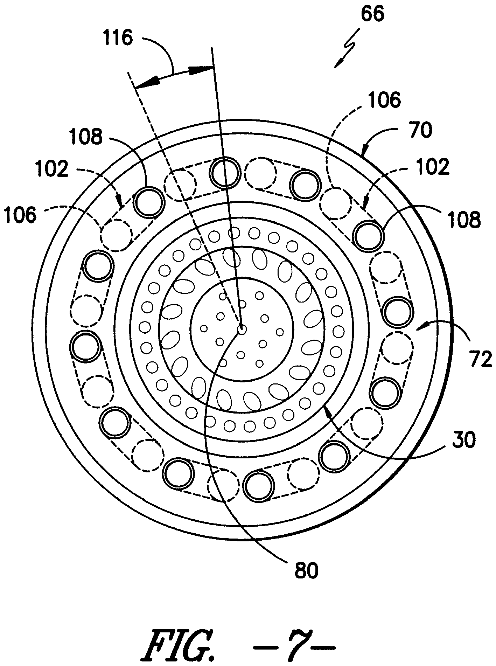

Moreover, in a further embodiment, each upstream end 106 of the fluid conduits 102 may be circumferentially offset from each downstream end 108. For example, FIG. 7 illustrates a further variation of the embodiments described above, particularly illustrating a portion of a downstream face of the liner cap 66 looking upstream from the combustion chamber 62. As shown, the circumferential positioning of the upstream ends 106 of each fluid conduit 102 in the nozzle plate 70 is offset from the circumferential positioning of the downstream ends 108 of each fluid conduit in the splash plate 94 by a circumferential angle 116 defined relative to the centerline 80 of each fuel nozzle 30. As such, the fluid jets 104 expelled from the fluid conduits 102 may have a circumferential, swirling component to their flow, thereby providing for enhanced mixing of the fluids 36, 38 discharged from the fuel nozzles 30.

It should be appreciated that, although the present subject matter has been generally described as using compressor discharge fluid 54 for injection into the combustion chamber 62, any other suitable fluid from any suitable fluid source may be supplied to and expelled from the fluid conduits 102. For example, steam, nitrogen and/or other suitable fluids may be injected into the combustion chamber 62 through the fluid conduits 102.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A combustor (20) comprising:
a combustion liner (50) defining a combustion chamber (62);
a liner cap (66) disposed upstream of said combustion chamber (62), said liner cap (66) including a first plate (70) and a second plate (72; and
a fluid conduit extending between said first and second plates, said fluid conduit being configured to receive fluid flowing adjacent to said first plate (70) and inject the fluid into said combustion chamber (62).

2. The combustor of claim 1, further comprising a plurality of fluid conduits extending between said first (70) and second (72) plates, each of said plurality of fluid conduits being configured to receive the fluid flowing adjacent to said first plate (70) and inject the fluid into said combustion chamber (62).

3. The combustor of claim 1 or 2, further comprising a fuel nozzle (30) extending through at least a portion of said liner cap (66), said fuel nozzle (30) defining a nozzle centerline (80).

4. The combustor of claim 3, wherein each said fluid conduit, or each of said plurality of fluid conduits, is oriented substantially parallel to said nozzle centerline (80).

5. The combustor of claim 3, wherein each said fluid conduit, or each of said plurality of fluid conduits, is angled relative to said nozzle centerline (80).

6. The combustor of claim 5, wherein each said fluid conduit, or each of said plurality of fluid conduits, extends radially outwardly relative to said nozzle centerline (80) from said first plate (70) to said second plate (72).

7. The combustor of claim 5, wherein each said fluid conduit, or each of said plurality of fluid conduits, is angled relative to said nozzle centerline (80) at an angle equal to less than about 30 degrees.

8. The combustor of any preceding claim, wherein each said fluid conduit, or each of said plurality of fluid conduits, includes a first end disposed adjacent to said first plate (70) and a second end disposed adjacent to said second plate (72).

9. The combustor of claim 8, wherein said first end is circumferentially offset from said second end.

10. The combustor of any preceding claim, wherein said second plate is spaced apart from said first plate (70) such that a plenum (94) is defined between said first (70) and second (72) plates, said first plate (70) defining a plurality of impingement holes (96) for injecting a portion of the fluid into said plenum (94).

11. The combustor of any of claims 3 to 10 when dependent on claim 2, further comprising a fuel nozzle (30) extending through at least a portion of said liner cap (66), wherein said plurality of fluid conduits is arranged in an annular array around said fuel nozzle (30).
